# EUROPÄISCHE PATENTSCHRIFT

(11) **EP 0 927 594 B1**
(45) Veröffentlichungstag und Bekanntmachung des Hinweises auf die Patenterteilung: **10.09.2003**
(21) Anmeldenummer: 98122994.1
(22) Anmeldetag: 03.12.1998
(51) Int. Cl.: B23K 10/02

(54) **Verfahren zum Beschichten von Werkstoffen**
Method for coating materials
Procédé pour déposer des revêtements sur des matériaux

(30) Priorität: 23.12.1997 DE 19757568
(43) Veröffentlichungstag der Anmeldung: 07.07.1999
(73) Patentinhaber: CASTOLIN S.A., 1025 Lausanne - St. Sulpice (CH)
(72) Erfinder: Dvorak, Michael Dr., 1022 Chavannes (CH)
(74) Vertreter: Hiebsch, Gerhard F., Dipl.-Ing.

(56) Entgegenhaltungen:
- EP-A- 0 452 494
- DE-A- 19 626 941
- US-A- 4 818 307
- PATENT ABSTRACTS OF JAPAN vol. 016, no. 044 (M-1207), 4. Februar 1992 & JP 03 248777 A (NISSAN MOTOR CO LTD;OTHERS: 01), 6. November 1991

## Beschreibung

Die Erfindung betrifft ein Verfahren zum Beschichten von Werkstoffen durch Plasma-Pulverauftragsschweißen pulverförmiger zusatzwerkstoffe. Das Beschichten von Werkstoffen auf Eisenbasis mit pulverförmigen Werkstoffen auf Nickel-, Kobalt- und/oder Kupferbasis wird seit langem in der Industrie durchgeführt. Beim Auftragen von leicht oxidierenden Werkstoffen wie etwa Aluminium, Titan, deren Legierungen ist durch die sich an der Oberfläche ausbildenden Oxide der Beschichtungsvorgang sehr stark gestört, gegebenenfalls gänzlich undurchführbar.

Auch Versuche, diese Vorgänge unter einem Schutzgas zu halten, schlugen fehl. Die einzige Möglichkeit für einen solchen Beschichtungsvorgang ist das sehr kostspielige und umständliche Arbeiten unter Vakuum, das nie zu einer großtechnischen Anwendung geführt hat.

Mit der nachveröffentlichten DE 196 26 941 A1 der Anmelderin wird zur Lösung der Aufgabe, das Beschichten von leicht oxidierenden Werkstoffen -- insbesondere von Leichtmetallen -- auf einfache und kostengünstige Weise zu ermöglichen, vorgeschlagen, auf einer Aluminiumlegierung eine Beschichtung mit einem pulverförmigen Zusatzwerkstoff durch Pulverauftragsschweißen mit übertragenem Plasmalichtbogen (PTA = Plasma Transferred Arc) aufzubringen durch Einsatz eines Wechselstroms oder eines Gleichstroms mit einem überlagerten Wechselstrom; dank dieser Maßgabe wird die sich durch den Luftsauerstoff bzw. den Restsauerstoff im Schutzgas ausbildende Oxidhaut an der Oberfläche des Grundwerkstoffes oder des pulverförmigen Zusatzwerkstoffes zerstört bzw. aufgerissen. Dadurch wird es möglich, Beschichtungen auch auf oder mit diesen leicht oxidierenden Werkstoffen durchzuführen und eine gute Schweißqualität zu erzielen.

Ein Plasmabrenner für einen übertragenen Lichtbogen der eingangs genannten Art mit rundum angefastem freiem Ende einer -- vor einer dem Düsendurchbruch vorgeordneten Kammer stehenden -- zylindrischen. Rundstabelektrode sind zwar aus der EP 0 452 494 A1 bekannt. Jedoch findet sich dort kein Hinweis auf die erörterte Lösung.

Nach JP 03 248 777 A wird ein Schweißstrom zwischen einer unverzehrbaren Elektrode sowie einer Platte aus einer Aluminiumlegierung von einer Wechselstromquelle erzeugt. Die Aluminiumlegierung enthält 15 bis 55 Gew.-% Cu und dient als Aufbauwerkstoff, zu dessen Ausbildung als Wärmequelle ein Wechselstrom-Plasmabogen eingesetzt wird.

Aus der US 4,818,307 A ist eine Kupfer-Basislegierung für widerstandsfähige Beschichtungen bekannt, die 5 bis 30 Gew.-% an Nickel, 1 bis 5 Gew.-% Silizium, 0,5 bis 3 % Bor und 4 bis 30 % Eisen, Rest Kupfer samt Verunreinigungen enthält. Wahlweise kann noch wenigstens einer der folgenden Beistoffe enthalten (in Gew.-%) sein: 0,1 bis 5 Aluminium, 0,1 bis 10 Titan, 1 bis 10 Mangan, 0,02 bis 2 Kohlenstoff und/oder 0,5 bis 10 Chrom.

Angesichts dieser Gegebenheiten hat sich nun der Erfinder die Aufgabe gestellt, ein ergänzendes Verfahren zum Erzeugen von Hartplattierungen mittels des Plasma-Pulverauftragsschweißen (PTA) anzubieten.

Zur Lösung dieser Aufgabe führt die Lehre der unabhängigen Patentansprüche 1 und 2, auf dessen Wortlaut Bezug genommen wird; die Unteransprüche geben bevorzugte Ausgestaltungen an.

Bevorzugt wird dort ein Wegbselstrom in einem Frequenzbereich zwischen 10 und 100 Hz. Beim Arbeiten mit einem Gleichstrom als Energieträger muß diesem -- um die gleichen schweißtechnischen Eigenschaften zu erzielen -ein Wechselstrom mit einer Frequenz zwischen etwa 10 bis 1000 Hz oder im Frequenzbereich zwischen etwa 1 bis 200 KHz zugeordnet werden.

Vorgeschlagen jedoch nicht beansprucht wird auch, einen hohen Aufmischungsgrad mit dem Grundwerkstoff anzustreben sowie ferner, die Strömungsgeschwindigkeit der austretenden Gase erfindungsgemäß so zu wählen, daß die sich durch den Rest-Sauerstoff bildenden Oxide oder Schlacken durch die Gasströmung zerrissen und am Rande des Schmelzbades abgelagert werden.

Im Rahmen der vorliegenden offenbarung liegt zudem ein Plasmabrenner mit einem Düsendurchbruch engeren Querschnitts vorgeordnetem Gaskanal einer Brennerdüse sowie mit einer stabartigen Kathode, die für das Arbeiten mit einem überlagerten Wechselstrom zum Transferieren des Plasmas endwärts gerundet, insbesondere kugelartig ausgeformt, ist; dieses sphärische Kathodenende bildet den Fußpunkt des entstehenden Plasmalichtbogens.

Der Brenner ist jedoch nicht gegenstand der Erfindung.

Beim Plasmabrenner der Vorerfindung kann die bauchige Anformung der Kathode so angeordnet sein, daß sie eine durch die Stirnfläche einer die Kathode umfangenden Anode bestimmte Ebene tangiert oder letztere ein wenig -- etwa höchstens 3 bis 4 mm -- nach außen überragt.

Bevorzugt wird eine Anordnung mit in den Gaskanal der Brennerdüse zurückgenommener Kathode, deren sphärische Anformung dann in einem kurzen Abstand -- von ebenfalls höchstens 4 mm -- zu jener Ebene sowie in Spaltabstand zu einem Schulterabsatz, der einen Übergang zwischen dem Gaskanal und dem nachfolgenden Düsendurchbruch engeren Querschnittes bildet. An diesen ringartigen Schulterabsatz schließt ein zylindrischer Abschnitt des Gaskanals als Aufnahme für die Anformung der Kathode an und begrenzt mit dieser und dem Schulterabsatz den Gasdurchlaß.

Als günstig hat es sich erwiesen, die mit einem Wechselstrom oder mit einem Gleichstrom samt überlagertem Wechselstrom beaufschlagte Kathode mit einer Wasserkühlung auszustatten. Die Kathode kann beispielsweise als wassergekühlter Tragkörper mit austauschbar angesetztem Kathodenteil -aus hochschmelzendem Werkstoff mit geringer Wärmeleitfähigkeit -- für die Anformung bzw. für den Fußpunkt des Lichtbogens ausgebildet werden; den Tragkörper formt man vorteilhafterweise aus Kupfer oder einer Kupferlegierung.

Das erfindungsgemäße Verfahren ist eine Synergie von Verfahrensmodifikationen - Anwendung von Wechsel- und/oder Impulsstrom, chemische Zusammensetzung des Schweißzusatzwerkstoffes -- CuNi-Legierung in einem bevorzugten Verhältnis von etwa 70 : 30 -- mit Zusätzen von FE (< 10 wt. %), Cr (< 5 wt. %), B (< 3 wt. %), Si (< 3 wt. %) und C (< 1,5 wt. %) sowie Einstellen der Verfahrensparameter mit verfahrensuntypisch hohem Aufmischungsgrad von > 40 vol. %.

Die chemische Zusammensetzung des Zusatzwerkstoffes muß je nach zu beschichtender Al-Legierung und gewünschtem Härtegrad -- 200 bis 800 Vickers -- angepaßt werden. Zudem sind gegebenenfalls weitere Legerierungselemente als die bisher genannten -- wie Mo, Mn, Co, Ti, Ta, Zr, Mg in Mengen < 10 wt. sowie P, N < 2 wt. -- möglich. Gleichfalls ist die Einmischung von oxidischen, karbidischen oder anderen Hartstoffen (Nitride, Silizide) zur weiteren Steigerung der Verschleißbeständigkeit denkbar.

Die chemische Zusammensetzung der metallischen Matrix in der resultierenden Hartauftragung ergibt sich -- unter Vernachlässigung von Hartstoffeinlagerungen -- erfindungsgemäß wie folgt:

| **Al** | **Cu** | **Ni** | **Fe** | **Cr** | **Si** | **B** | **andere** |
|---|---|---|---|---|---|---|---|
| **30-70** | **42-21** | **18-9** | **6-2** | **4-0,5** | **1,8-0,5** | **< 2** | **< 10 wt %** |

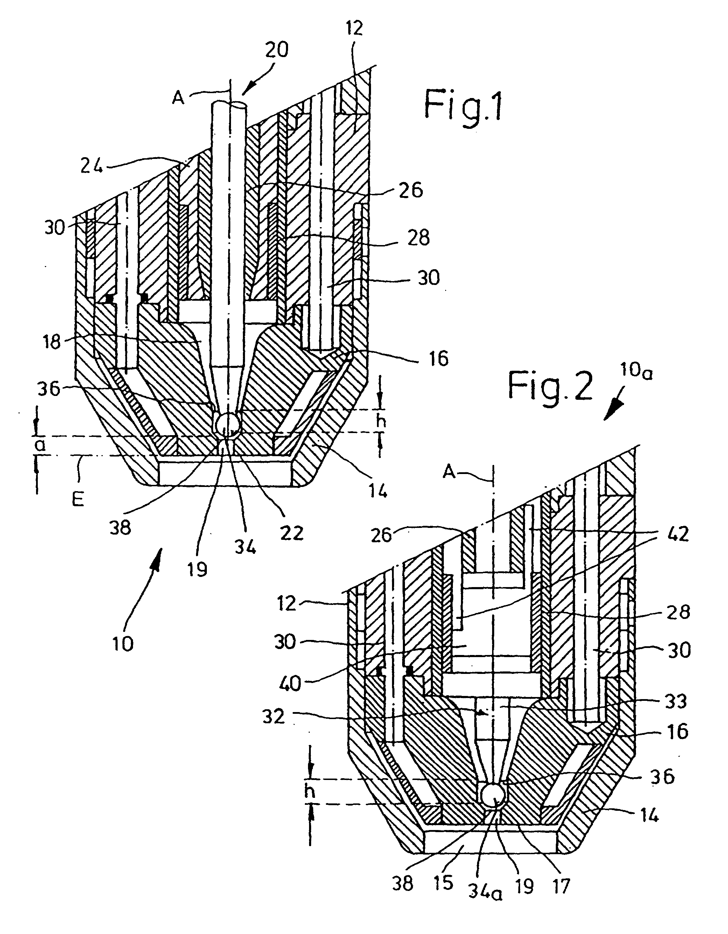

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in einem Teillängsschnitt durch den Kopf einer Brennerdüse zum Beschichten oder Schweißen von leicht oxidierbaren pulverförmigen Zusatzstoffen in
- Fig. 1, 2:: jeweils eine Stiftkathode mit dreidimensional ausgeformtem Fußpunkt für einen Plasmalichtbogen.

An einer Brennerdüse 10 ist auf einen Düsenkörper 12 eine Schutzgaskappe 14 aufgesetzt, die eine Anode 16 umgibt. In Längsachse A der Brennerdüse 10 verläuft in Fig. 1 eine -einen axialen Gaskanal 18 der Anode 16 durchgreifende -stabförmige Kathode 20. Diese endet mit einer Anformung 34 an einer von der Mündung 22 des Gaskanals 18 bzw. von der Stirnfläche 17 -- Fig. 2 -- der Anode 16 bestimmten Ebene E nahe einem Durchlaß 15 in der Schutzgaskappe 14. Die Anformung 34 liegt an einem zylindrischen Düsendurchbruch 19 des Gaskanals 18 in einem Abstand a von etwa 3 mm zu jener Mündungsebene E in einem Zylinderabschnitt 36 der Höhe h des Gaskanals 18 sowie in Spaltabstand zu einem schrägen Schulterring 38 gegenüber. An diesem geht der Zylinderabschnitt 36 des sich außerhalb dessen verjüngenden Gaskanals 18 in den zylindrischen Düsendurchbruch 19 -- zum Zylinderabschnitt 36 -- geringeren Durchmessers über.

Der Kathode 20 sind -- innerhalb einer zylindrischen Spanneinrichtung 24 vorgesehene -- Kontaktteile 26 zugeordnet, die mit ihrer Spanneinrichtung 24 in einer Isolierung 28 ruhen. Letztere ist ihrerseits in jenem Düsenkörper 12 untergebracht. Im Düsenkörper 12 sind in Abstand zur Isolierung 28 achsparallele Wasserkühlkanäle 30 zu erkennen.

Bei der Ausgestaltung einer Brennerdüse 10ₐ nach Fig. 2 enthält deren Kathode 32 einen Kathodenteil in Form einer kurzen Stiftkathode 33 aus hochschmelzendem Werkstoff sowie von geringer Wärmeleitfähigkeit für die gerundete Anformung 34ₐ. Der Kathodenteil 33 ist axial an einen Tragkörper 40 aus Kupfer angeschraubt. Letzterer ist mit einer Wasserkühleinrichtung 42 verbunden.

Nicht dargestellt ist eine Ausführung, bei der die Anformung 34 jene Stirnfläche 17 bzw. Ebene E um ein Maß von bis zu 4 mm -- bevorzugt bis zu 3 mm -- überragt.

Jene Anformung 34, 34ₐ wird beim Anlegen eines Stromes während des Plasma-Pulverauftragsschweißen zum Fußpunkt des entstehenden Plasmalichtbogens. Die beispielsweise aus Wolfram oder einer Wolfram-Legierung geformte Stiftkathode 32, 32ₐ wird mit Wechselstrom in einem Frequenzbereich zwischen 10 und 100 Hz betrieben.

## Patentansprüche

1. Verfahren zum Beschichten von Werkstoffen durch Plasma-Pulverauftragsschweißen pulverförmiger Zusatzwerkstoffe unter Einsatz von Wechselstrom als Schweißstrom zum Erzeugen eines übertragenen Plasmalichtbogens für das Pulverauftragsschweißen, bei dem Wechselstrom einer Frequenz zwischen 10 bis 100 Hz oder ein Gleichstrom, dem ein Wechselstrom einer Frequenz von 10 bis 1000 Hz oder von 1 bis 200 KHz überlagert ist für leicht oxidierbare Werkstoffe eingesetzt wird, wobei an einer aus einer Elektrode (20) herausgeformten sphärischen oder kugelförmigen Ausformung (34) ein Fußpunkt des Plasmalichtbogens hergestellt sowie als Schweißzusatzwerkstoff eine CuNi-Legierung mit Zusätzen (in Gew.-%) von
| | | |
|---|---|---|
| Fe | unter | 10; |
| Cr | unter | 5; |
| B | unter | 4; |
| Si | unter | 4; |
| C | mit | 1,5, |
mit einem Aufmischungsgrad von mehr als 40 Vol.-% eingesetzt wird.

2. Verfahren zum Beschichten von Werkstoffen durch Plasma-Pulverauftragsschweißen pulverförmiger Zusatzwerkstoffe unter Einsatz von Wechselstrom als Schweißstrom zum Erzeugen eines übertragenen Plasmalichtbogens für das Pulverauftragsschweißen, bei dem Wechselstrom einer Frequenz zwischen 10 bis 100 Hz oder ein Gleichstrom, dem ein Wechselstrom einer Frequenz von 10 bis 1000 Hz oder von 1 bis 200 KHz überlagert ist für leicht oxidierbare Werkstoffe eingesetzt wird, wobei an einer aus einer Elektrode (20) herausgeformten sphärischen oder kugelförmigen Ausformung (34) ein Fußpunkt des Plasmalichtbogens hergestellt sowie als Schweißzusatzwerkstoff eine CuNi-Legierung mit Zusätzen (in Gew.-%) von Mo, Mn, Co, Ti, Ta, Zr, Mg in Mengen unter 10 sowie P, N in Mengen unter 2 eingesetzt wird.

3. Verfahren nach Anspruch 1 oder 2, **gekennzeichnet durch** eine metallische Matrix mit Zusätzen (in Gew.-%) :
| | |
|---|---|
| Al | 30 bis 70; |
| Cu | 42 bis 21; |
| Ni | 18 bis 9; |
| Fe | 6 bis 2; |
| Cr | 4 bis 0,5; |
| Si | 1,8 bis 0,5; |
| B | unter 2; |
| andere: | unter 10. |

4. Verfahren nach einem der Ansprüche 1 bis 3, **gekennzeichnet durch** ein Verhältnis von Cu und Ni von etwa 70 : 30.

5. Verfahren nach einem der Ansprüche 1 bis 4, **gekennzeichnet durch** das Einmischen von oxidischen, karbidischen od.dgl. Hartstoffen.

## Claims

1. Method of coating materials by plasma-arc powder surfacing with pulverulent fillers using alternating current as the welding current in order to establish a plasma transferred arc for the powder surfacing, in which alternating current having a frequency of between 10 and 100 Hz or a direct current superposed with an alternating current having a frequency of 10 to 1000 Hz or 1 to 200 KHz is used for easily oxidisable materials, wherein the root of the plasma arc is produced on a spherical or globular shaped portion (34) formed out of an electrode (20) and a CuNi alloy with the addition (in % by weight) of
| | | |
|---|---|---|
| Fe | less than | 10; |
| Cr | less than | 5; |
| B | less than | 4; |
| Si | less than | 4; |
| C | | 1.5 |
with a degree of dilution of more than 40 % by volume is used as the weld filler.

2. Method of coating materials by plasma-arc powder surfacing with pulverulent fillers using alternating current as the welding current in order to establish a plasma transferred arc for the powder surfacing, in which alternating current having a frequency of between 10 and 100 Hz or a direct current superposed with an alternating current having a frequency of 10 to 1000 Hz or 1 to 200 KHz is used for easily oxidisable materials, wherein the root of the plasma arc is produced on a spherical or globular shaped portion (34) formed out of an electrode (20) and a CuNi alloy with the addition (in % by weight) of Mo, Mn, Co, Ti, Ta, Zr and Mg in quantities of less than 10 and of P and N in quantities of less than 2 is used as the weld filler.

3. Method according to claim 1 or claim 2, **characterised by** a metallic matrix with the addition (in % by weight) of:
| | | |
|---|---|---|
| Al | 30 to | 70; |
| Cu | 42 to | 21; |
| Ni | 18 to | 9; |
| Fe | 6 to | 2; |
| Cr | 4 to | 0.5; |
| Si | 1.8 to | 0.5; |
| B | less than | 2; |
| others: | less than | 10. |

4. Method according to one of claims 1 to 3, **characterised by** a ratio of Cu to Ni of approximately 70 : 30.

5. Method according to one of claims 1 to 4, **characterised by** the incorporation of oxidic, carbidic or similar hard materials.

## Revendications

1. Procédé de revêtement de matériaux par des matériaux adjuvants pulvérulents par soudure à la poudre assistée au plasma avec mise en oeuvre de courant alternatif comme courant de soudure pour l'obtention d'un arc de soudure plasma transféré pour la soudure à la poudre, dans lequel on met en oeuvre pour des matériaux facilement oxydables un courant alternatif d'une fréquence comprise entre 10 et 100 Hz ou un courant continu auquel est superposé un courant alternatif d'une fréquence de 10 à 1000 Hz ou de 1 à 200 KHz, où l'on prévoit la racine de l'arc plasma à une saillie sphérique (34) formée à partir d'une électrode (20) et que l'on met en oeuvre comme matériau adjuvant de soudure un alliage CuNi comprenant des additifs (en % en poids) de
Fe inférieur à 10 ;
Cr inférieur à 5 ;
B inférieur à 4 ;
Si inférieur à 4 ;
C de 1,5,
présentant un taux de mélange supérieur à 40% en volume.

2. Procédé de revêtement de matériaux par des matériaux adjuvants pulvérulents par soudure à la poudre au plasma avec mise en oeuvre de courant alternatif comme courant de soudure pour l'obtention d'un arc de soudure plasma transféré pour la soudure à la poudre, dans lequel on met en oeuvre pour des matériaux facilement oxydables un courant alternatif d'une fréquence comprise entre 10 et 100 Hz ou un courant continu auquel est superposé un courant alternatif d'une fréquence de 10 à 1000 Hz ou de 1 à 200 KHz, où l'on prévoit la racine de l'arc plasma à une saillie sphérique (34) formée à partir d'une électrode (20) et que l'on met en oeuvre comme matériau adjuvant de soudure un alliage CuNi comprenant des additifs (en % en poids) de Mo, Mn, Co, Ti, Ta, Zr, Mg, en quantité inférieures à 10 ainsi que P, N en quantités inférieures à 2.

3. Procédé selon la revendication 1 ou 2, **caractérisé par** une matrice métallique présentant les additifs suivants (en % en poids) :
| | |
|---|---|
| Al | 30 à 70 ; |
| Cu | 42à21; |
| Ni | 18à9; |
| Fe | 6à2; |
| Cr | 4 à 0,5 ; |
| Si | 1,8 à 0,5 ; |
| B | inférieur à 2 ; |
| autres : | inférieurs à 10. |

4. Procédé selon l'une des revendications 1 à 3, **caractérisé par** un rapport entre Cu et Ni d'environ 70 : 30.

5. Procédé selon l'une des revendications 1 à 4, **caractérisé par** l'introduction de matériaux durs oxydés, carburés, carbidiques ou similaires.
